# FASCICULE DE BREVET EUROPEEN

(11) **EP 1 673 546 B1**
(45) Date de publication et mention de la délivrance du brevet: **28.02.2007**
(21) Numéro de dépôt: 04791539.2
(22) Date de dépôt: 14.10.2004
(51) Int. Cl.: F16D 21/06

(54) **DOUBLE EMBRAYAGE, NOTAMMENT POUR VEHICULE AUTOMOBILE**
DOPPELKUPPLUNG, INSBESONDERE FÜR EIN KRAFTFAHRZEUG
DOUBLE CLUTCH, IN PARTICULAR FOR A MOTOR VEHICLE

(30) Priorité: 14.10.2003 FR 0350676
(43) Date de publication de la demande: 28.06.2006
(73) Titulaire: VALEO EMBRAYAGES, 80009 Amiens (FR)
(72) Inventeur: MARIE, Eric, F-80800 Villers Bretonneux (FR); DHALLEINE, Christophe, F-80800 Villers Bretonneux (FR); CUNY, Bernard, F-91370 Verrières le Buisson (FR); THERY, Pascal, F-80000 Amiens (FR)
(86) Numéro de dépôt international: PCT/FR2004/002628
(87) Numéro de publication internationale: WO 2005/038280

(56) Documents cités:
- DE-A- 10 018 646
- DE-A- 10 155 458
- DE-B- 1 294 228
- DE-C- 19 953 091
- FR-A- 2 810 708

## Description

La présente invention concerne un double embrayage, notamment pour véhicule automobile.

Un double embrayage permet habituellement de coupler alternativement l'arbre d'un moteur du véhicule avec deux arbres coaxiaux d'entrée d'une boîte de vitesses, dite boîte de vitesses à double embrayage.

Ainsi, un double embrayage permet de changer de rapport de vitesses tout en maintenant la transmission d'un couple moteur aux roues du véhicule. En effet, un double embrayage comprend habituellement des premier et second embrayages associés respectivement à des rapports de vitesses pairs et impairs. Lors d'un changement de rapport de vitesses, un premier embrayage est débrayé alors que le second embrayage est embrayé si bien que le couple moteur est transféré progressivement du premier au second embrayage. Ainsi, la somme des couples transmis par les premier et second embrayages est toujours sensiblement égale au couple moteur.

On connaît déjà dans l'état de la technique un double embrayage, notamment pour véhicule automobile, du type comprenant un couvercle dans lequel sont logés des premier et second diaphragmes destinés à coopérer respectivement avec des premier et second plateaux de pression.

Chaque embrayage comprend un mécanisme comportant un diaphragme destiné à coopérer avec un plateau de pression solidaire en rotation du couvercle et de l'arbre du moteur. Chaque diaphragme est déplaçable, au moyen d'une butée de commande correspondante, entre une position de repos et une position active. Selon le type de l'embrayage, la position active du diaphragme correspond à un couplage ou découplage des arbres de moteur et de boîte de vitesses et la position de repos du diaphragme correspond à un découplage ou couplage de ces arbres de moteur et de boîte de vitesses. Le cas échéant, le type de l'embrayage peut être mixte, la position active d'un des diaphragmes correspondant à un couplage alors que la position active de l'autre des diaphragmes correspond à un découplage.

La butée de commande est commandée par un actionneur piloté par un calculateur électronique afin d'exercer une force prédéterminée sur le diaphragme.

Chaque plateau de pression, sollicité par le diaphragme correspondant, est destiné à enserrer un disque de friction entre ce plateau de pression et un plateau de réaction correspondant. Chaque disque de friction est lié en rotation à un arbre correspondant de boîte de vitesses et chaque plateau de réaction est solidaire en rotation du couvercle et d'un volant lié à l'arbre moteur. Ainsi, le serrage d'un disque de friction entre les plateaux de pression et de réaction correspondants permet la transmission d'un couple entre l'arbre moteur et l'arbre de boîte de vitesses associé.

Les cahiers des charges pour un double embrayage de ce type imposent que les points d'articulation des diaphragmes de ce double embrayage répondent à certaines conditions.

Parmi ces conditions, on notera la nécessité d'exercer en permanence une charge axiale sur les diaphragmes afin de garantir une absence de jeu au niveau des zones d'articulation de ces diaphragmes pendant la durée de vie habituelle du double embrayage, et cela malgré l'usure de ces zones d'articulation due aux déplacements des diaphragmes. De plus, les zones d'articulation des diaphragmes doivent résister efficacement aux charges axiales transmises par les butées de commande sur ces diaphragmes lorsque les rapports de vitesses correspondants sont sélectionnés.

En outre, les diaphragmes doivent coopérer au niveau de leurs zones d'articulation avec des formes d'appui de profils bombés adaptés à un pivotement efficace des diaphragmes.

Le respect des conditions ci-dessus aboutit dans l'état de la technique à une structure relativement complexe des moyens d'articulation et de montage des diaphragmes.

L'invention a notamment pour but de fournir un double embrayage dont les moyens d'articulation des diaphragmes répondent aux conditions précitées, tout en permettant un montage simple et efficace du double embrayage.

A cet effet, l'invention a pour objet un double embrayage du type précité, caractérisé en ce qu'il comporte un organe de positionnement axial, distinct du couvercle, participant au positionnement, par rapport à ce couvercle, à la fois du premier diaphragme et du second diaphragme.

Cet organe de positionnement axial assure, en plus d'un positionnement axial précis des diaphragmes dans le couvercle, le maintien de ces diaphragmes dans le couvercle, après empilement de ces diaphragmes et d'autres organes éventuels dans le couvercle. Ainsi, l'organe de positionnement permet un montage simple et précis des diaphragmes par empilement.

De plus, des moyens performants matérialisant des zones d'articulation des diaphragmes peuvent être ménagés facilement sur l'organe de positionnement axial.

Un double embrayage selon l'invention peut en outre comporter l'une ou plusieurs des caractéristiques suivantes :
l'organe de positionnement est fixé sur une face de fixation sensiblement
perpendiculaire aux axes des diaphragmes, solidaire du couvercle;
   - l'organe de positionnement est fixé sur un épaulement du couvercle ;
   - l'organe de positionnement est du type à effet élastique axial ;
   - l'organe de positionnement est fixé sur l'épaulement à l'aide de moyens rapportés ;
   - les moyens rapportés participent également à la fixation d'autres organes tels que des languettes de liaison d'un des plateaux de pression avec le couvercle ou un support pour dispositif de rattrapage d'usure de moyens de friction ;
   - le premier diaphragme est pincé entre deux parties d'appui et d'articulation sensiblement en vis à vis ménagées respectivement sur l'organe de positionnement et un organe d'entretoisement axial en appui sur le couvercle par l'intermédiaire du second diaphragme ;
   - la partie d'appui ménagée sur l'organe de positionnement est délimitée par une nervure annulaire ;
   - la partie d'appui ménagée sur l'organe d'entretoisement est délimitée par une extrémité de cet organe fixe d'entretoisement ;
   - le second diaphragme est pincé entre deux parties d'appui et d'articulation sensiblement en vis à vis ménagées respectivement sur l'organe d'entretoisement et le couvercle ;
   - la partie ménagée sur l'organe d'entretoisement est délimitée par des pattes radiales;
   - la partie d'appui ménagée sur le couvercle est délimitée par une nervure annulaire ;
   - l'organe d'entretoisement est en matière plastique ;
   - l'organe d'entretoisement est en métal, de préférence en tôle;
   - l'organe d'entretoisement est muni de moyens, par exemple de bossages, coopérant avec des moyens complémentaires ménagés sur le couvercle, par exemple des évidements, pour assurer le positionnement angulaire et le centrage de cet organe d'entretoisement par rapport à ce couvercle ;
   - le premier diaphragme est pincé entre deux parties d'appui et d'articulation sensiblement en vis à vis ménagées respectivement sur l'organe de positionnement et le couvercle ;
   - la partie d'appui ménagée sur l'organe de positionnement est délimitée par une nervure annulaire ;
   - la partie d'appui ménagée sur le couvercle est délimitée par une nervure annulaire ;
   - le second diaphragme est pincé entre deux parties d'appui et d'articulation sensiblement en vis à vis ménagées respectivement sur l'organe de positionnement et le couvercle ;
   - la partie d'appui ménagée sur l'organe de positionnement est délimitée par des extrémités de pattes prolongeant l'organe de positionnement ;
   - la partie d'appui ménagée sur le couvercle est délimitée par une nervure annulaire ;
   - le premier diaphragme est destiné à coopérer avec une saillie annulaire solidaire du premier plateau de pression ;
   - le second diaphragme est destiné à coopérer avec le second plateau de pression par l'intermédiaire d'un organe mobile d'entretoisement axial.

L'invention sera mieux comprise à la lecture de la description qui va suivre, donnée uniquement à titre d'exemple, et faite en se référant aux dessins annexés dans lesquels :
- la figure 1 est une demi-vue en coupe axiale d'un double embrayage selon un premier mode de réalisation de l'invention ;
- la figure 2 est une vue partielle en perspective d'un couvercle et de l'organe d'entretoisement du double embrayage selon le premier mode de réalisation de l'invention ;
- la figure 3 est une vue en perspective de l'organe d'entretoisement des diaphragmes du double embrayage représenté sur la figure 1 ;
- la figure 4 est une demi-vue similaire à la figure 1 d'un double embrayage selon un deuxième mode de réalisation de l'invention ;
- la figure 5 est une demi-vue similaire aux figures 1 et 4 d'un double embrayage selon un troisième mode de réalisation de l'invention.

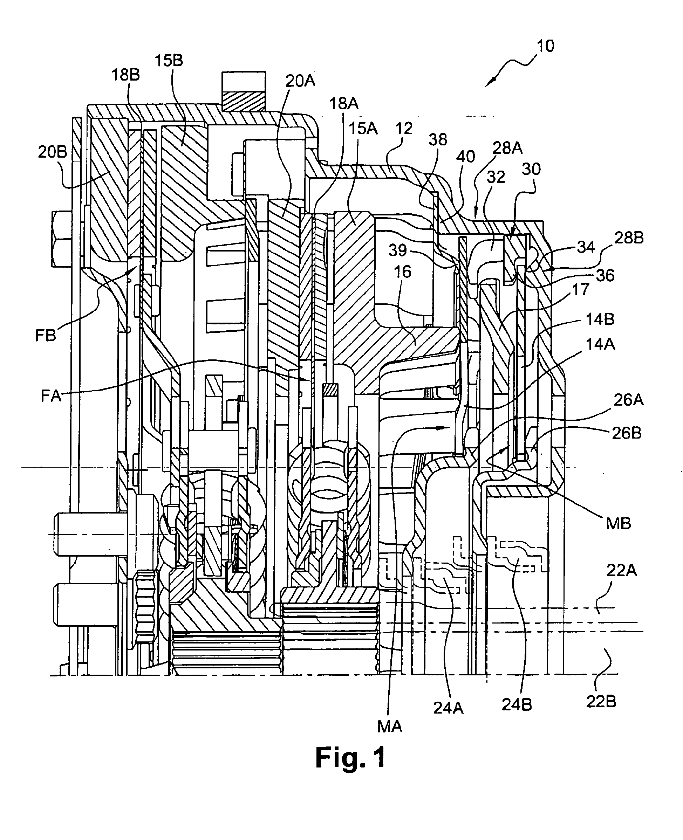

On a représenté sur la figure 1 un double embrayage pour véhicule automobile selon un premier mode de réalisation de l'invention, désigné par la référence générale 10. Ce double embrayage est destiné à coupler un moteur du véhicule avec des arbres d'entrée de boîte de vitesses.

Le double embrayage 10 comporte un couvercle 12 couplé au moteur. Des premier et second embrayages de passage de rapports de parités différentes sont logés dans le couvercle 12 qui a une forme générale de cuvette. Ces embrayages comprennent respectivement des premier MA et second MB mécanismes destinés à agir sur des première FA et seconde FB frictions.

Les mécanismes MA, MB comprennent respectivement des premier 14A et second 14B diaphragmes destinés à coopérer avec des premier 15A et second 15B plateaux de pression solidaires en rotation du couvercle 12.

Le premier diaphragme 14A coopère avec le premier plateau de pression 15A par l'intermédiaire d'une saillie annulaire 16, continue ou discontinue, solidaire de ce premier plateau de pression 15A. Le second diaphragme 14B coopère avec le second plateau de pression 15B par l'intermédiaire d'un organe mobile 17 d'entretoisement axial.

Les frictions FA, FB comprennent respectivement des premier 18A et second 18B disques de friction.

Chaque plateau de pression 15A, 15B est susceptible, lorsqu'il est poussé, d'enserrer un disque de friction 18A, 18B contre un plateau de réaction correspondant 20A, 20B, solidaire en rotation d'un volant moteur et du couvercle 12.

Les deux disques de friction 18A, 18B entraînent en rotation deux arbres de boîte de vitesses, respectivement 22A, 22B, correspondant à des rapports de vitesses de parités différentes.

La commande des embrayages se fait au moyen de butées de commande classiques 24A, 24B coopérant chacune avec le diaphragme 14A, 14B correspondant par l'intermédiaire d'un organe de transmission d'effort 26A, 26B.

On notera que chaque diaphragme 14A, 14B forme un levier muni d'un bord radialement externe d'articulation et d'un bord radialement interne de coopération avec l'organe de transmission d'effort 26A, 26B correspondant.

Ce levier est du second genre car la zone du diaphragme 14A, 14B qui coopère avec la saillie annulaire 16 du premier plateau de pression 15A ou l'organe mobile d'entretoisement 17 en appui sur le second plateau de pression 15B est située radialement entre le bord externe d'articulation et le bord interne de coopération avec l'organe de transmission d'effort 26A, 26B correspondant.

Un tel levier permet de démultiplier la force appliquée par la butée de commande 24A, 24B et de la transmettre au plateau de pression correspondant 15A, 15B.

Dans le mode de réalisation représenté sur la figure 1, chaque embrayage est du type dans lequel la position de repos du diaphragme 14A, 14B correspond à un découplage de l'arbre de moteur d'avec l'arbre correspondant de boîte de vitesses.

L'articulation 28A, 28B de chaque diaphragme 14A, 14B est réalisée par pincement de ce diaphragme entre des premier et second moyens d'appui et d'articulation, sensiblement en vis à vis, agencés dans le couvercle 12.

Le premier moyen d'appui et d'articulation de chaque diaphragme 14A, 14B est ménagé sur un organe 30 d'entretoisement axial des deux diaphragmes 14A, 14B. Dans ce premier mode de réalisation, l'organe d'entretoisement 30 est en plastique.

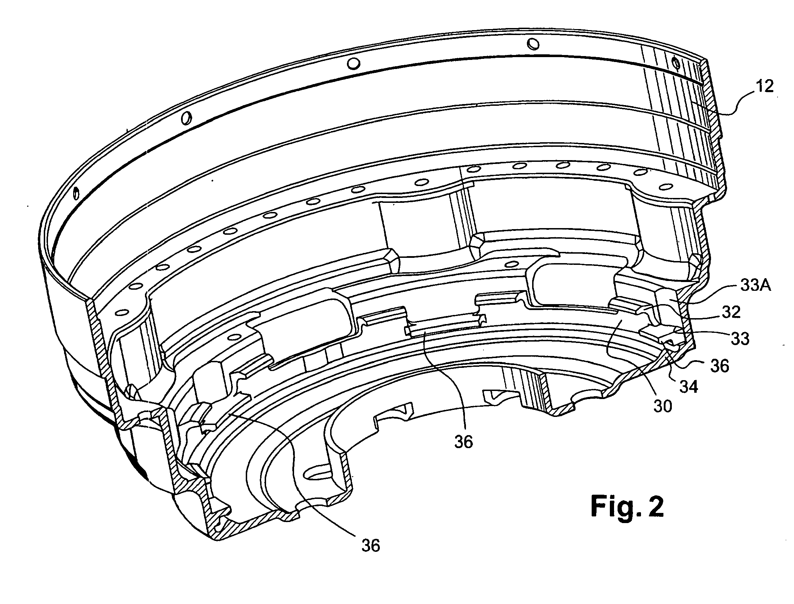

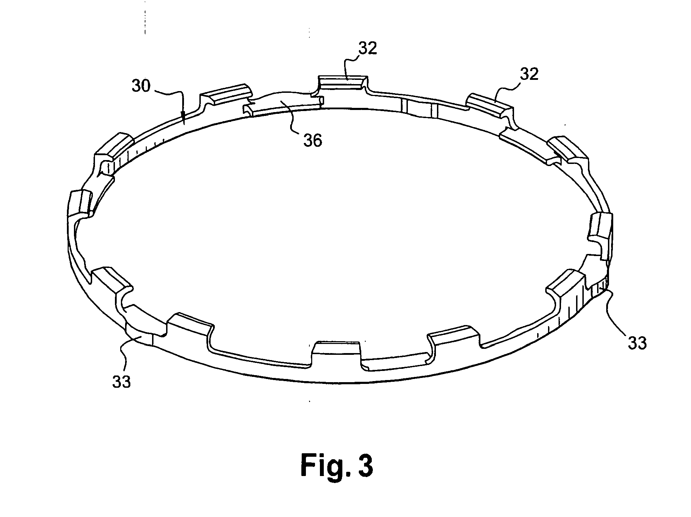

Les figures 2 et 3 représentent l'organe d'entretoisement 30 plus en détail. L'organe d'entretoisement 30, de forme générale annulaire, est muni de pattes axiales 32 et de bossages radialement externes 33. Ces bossages 33 forment des moyens destinés à coopérer avec des moyens complémentaires ménagés sur le couvercle 12, en particulier des évidements axiaux 33A, pour assurer le positionnement angulaire et le centrage de cet organe d'entretoisement 30 par rapport à ce couvercle 12.

Le premier moyen d'appui et d'articulation du premier diaphragme 14A est formé par les pattes axiales 32. Le premier moyen d'appui et d'articulation du second diaphragme 14B est formé par une nervure annulaire 34 continue ou discontinue ménagée sur le couvercle 12.

Le second moyen d'appui et d'articulation du second diaphragme 14B est formé par des pattes radialement internes 36 intercalées axialement entre les deux extrémités de l'organe fixe d'entretoisement 30.

Le second diaphragme 14B est donc pincé entre deux parties d'appui et d'articulation sensiblement en vis à vis, ménagées respectivement sur l'organe fixe d'entretoisement 30 et le couvercle 12.

Le second moyen d'appui et d'articulation du premier diaphragme 14A est ménagé sur un organe 38 participant au positionnement axial, à la fois du premier diaphragme 14A et du second diaphragme 14B. En effet, l'organe de positionnement 38 comporte une nervure annulaire 39 formant une partie d'appui et d'articulation pour le premier diaphragme 14A.

Le premier diaphragme 14A est donc pincé entre deux parties d'appui et d'articulation sensiblement en vis à vis, ménagées respectivement sur l'organe de positionnement 38 et sur l'organe d'entretoisement axial 30.

Pour permettre un serrage efficace des frictions FA, FB du double-embrayage, les diaphragmes 14A, 14B sont pré-chargés au repos. Sans cette pré-charge, un diaphragme 14A, 14B serait, au repos, dans un état d'élasticité requerrant un début de course de la butée de commande relativement important pour appliquer un effort de serrage efficace sur la friction FA, FB correspondante. Lorsqu'une butée de commande 24A, 24B est actionnée, elle équilibre la pré-charge du diaphragme 14A, 14B correspondant avant de commencer le serrage de la friction FA, FB correspondante.

La pré-charge d'un diaphragme 14A, 14B permet donc de contrôler le serrage d'un embrayage correspondant de façon précise.

Les butées de commande 24A, 24B permettent de déplacer les diaphragmes 14A, 14B entre leurs positions de repos et active. Les deux parties d'appui 32, 34, 36, 39 d'un diaphragme sont sollicitées en alternance lorsque ce diaphragme est déplacé entre ses positions de repos et active.

En effet, en position de repos, chaque diaphragme 14A, 14B est pré-chargé. Sous l'effet de la pré-charge, le diaphragme 14A, 14B, d'une part, prend appui sur la seconde partie d'appui 39, 36 et,-d'autre part, sollicite la butée de commande 24A, 24B correspondante dans un sens axial d'éloignement par rapport à la position active du diaphragme 14A, 14B.

Sous l'effet de l'actionnement d'une butée de commande 24A, 24B, le diaphragme correspondant 14A, 14B est déplacé vers sa position active si bien que ce diaphragme 14A, 14B prend appui sur la première partie d'appui 32, 34.

Chaque diaphragme 14A, 14B change donc de partie d'appui lorsqu'il est déplacé entre ses positions de repos et active.

L'organe de positionnement 38 est fixé sur une face de fixation 40 solidaire du couvercle 12, sensiblement perpendiculaire aux axes des diaphragmes 14A, 14B. La face 40 est formée de préférence par un épaulement du couvercle 12.

L'organe de positionnement 38 est de préférence une rondelle à effet élastique axial, en métal, par exemple en tôle, ou éventuellement en matière plastique.

Le montage des diaphragmes 14A, 14B se fait par empilement dans le couvercle successivement du second diaphragme 14B, de l'organe d'entretoisement 30, du premier diaphragme 14A et de l'organe de positionnement 38. Cet organe de positionnement 38 étant élastique axialement, il assure le serrage des pièces de l'empilement entre le fond du couvercle et l'organe 38, et cela, dans tous les cas de fonctionnement : diaphragme pré-chargé en position de repos, diaphragme chargé en position active, changement de partie d'appui du diaphragme déplacé entre ses positions de repos et active, usure des parties d'appui du diaphragme ou usure de la friction changeant l'inclinaison du diaphragme. Les deux diaphragmes 14A, 14B sont positionnés précisément par rapport au couvercle 12 grâce à l'organe 38.

On notera donc que, dans le premier mode de réalisation de l'invention, le pincement des diaphragmes 14A, 14B entre leurs parties d'appui est réalisé en "série".

En effet, l'organe 38 serre, via la nervure 39, le premier diaphragme 14A sur l'organe d'entretoisement 30 qui est flottant axialement si bien que cet organe d'entretoisement 30 transmets la force de serrage de l'organe 38 aux pattes 36 qui serrent le second diaphragme 14B sur la nervure 34 du couvercle 12.

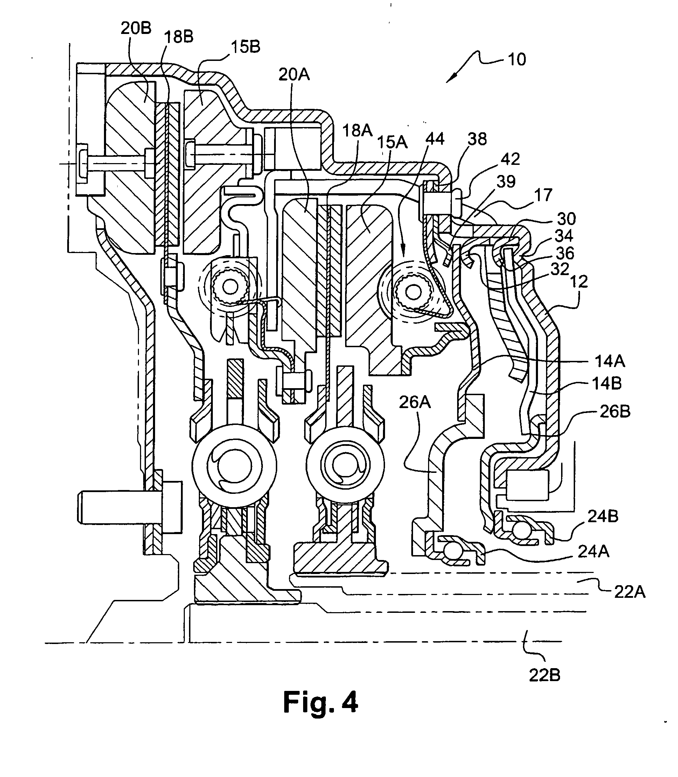

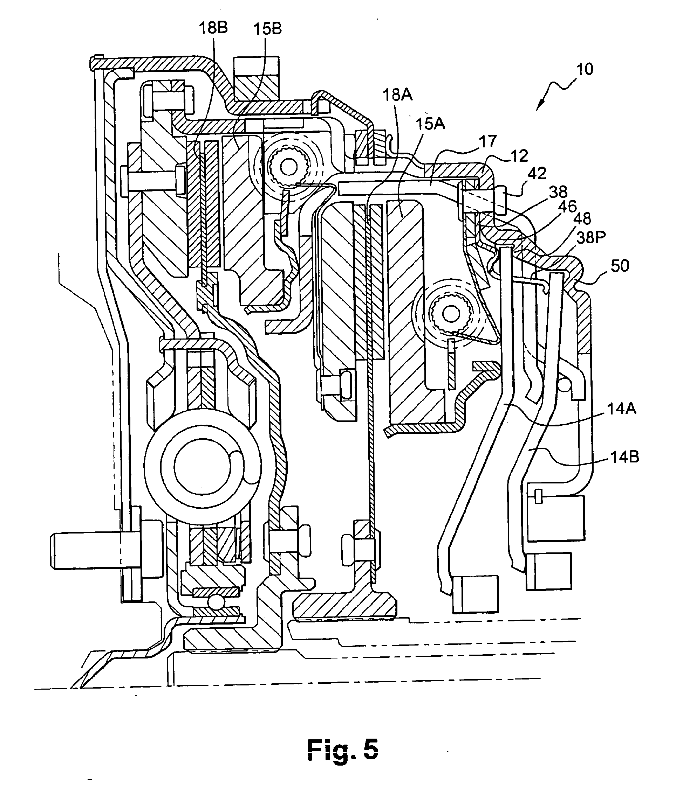

Les figures 4 et 5 représentent respectivement un double embrayage selon des deuxième et troisième modes de réalisation de l'invention. Sur ces figures 4 et 5, les éléments analogues à ceux des figures précédentes sont désignés par des références identiques.

Dans le cas de la figure 4, l'organe de positionnement 38 est fixé sur l'épaulement à l'aide de moyens rapportés, comprenant par exemple des rivets 42.

Chaque rivet 42 participe également à la fixation d'autres organes, comme des languettes de liaison d'un des plateaux de pression 15A avec le couvercle 12, ou un support pour dispositif 44 de rattrapage d'usure de moyens de frictions.

Par ailleurs, dans le deuxième mode de réalisation, l'organe d'entretoisement 30, dans ce cas en métal et de préférence en tôle, prend appui sur un épaulement du couvercle 12. L'organe 30 réalise ainsi un entretoisement entre le premier diaphragme 14A et le couvercle 12.

Dans ce deuxième mode de réalisation de l'invention, le pincement des deux diaphragmes 1 4A, 14B entre leurs parties d'appui est réalisé en "parallèle" à l'aide de deux moyens élastiques (nervure 39, pattes 36) pouvant assurer des serrages indépendants car portés respectivement par deux organes en appui sur le couvercle 12, à savoir l'organe de positionnement 38 et l'organe d'entretoisement 30.

En effet, l'organe 38 serre, via la nervure 39 qu'il porte, le premier diaphragme 14A sur l'organe d'entretoisement 30. Les pattes 36 portées par l'organe d'entretoisement 30 serrent le second diaphragme 14B sur la nervure 34 du couvercle 12.

Dans le cas de la figure 5, l'organe de positionnement 38 est prolongé vers le fond du couvercle 12 par des pattes 38P. Ces pattes 38P coopèrent avec le second diaphragme 14B, de manière à former une partie d'appui et d'articulation de ce diaphragme 14B.

Dans ce mode de réalisation, chaque diaphragme 14A, 14B, est pincé entre deux parties d'appui et d'articulation sensiblement en vis à vis, ménagées respectivement sur l'organe de positionnement 38 et le couvercle 12.

Pour ce qui est du premier diaphragme 14A, la partie d'appui ménagée sur l'organe de positionnement 38 est délimitée par une nervure annulaire discontinue 4 6, alors que la partie d'appui ménagée sur le couvercle 12 est délimitée par une nervure annulaire 48.

Pour ce qui est du second diaphragme 14B, la partie d'appui ménagée sur l'organe de positionnement 38 est délimitée par des extrémités des pattes 38P, ces pattes 38P traversant le premier diaphragme 14A par des fentes ménagées dans celui ci. La partie d'appui ménagée sur le couvercle 12 est délimitée par une nervure annulaire 50. Les pattes 38P assurent un pincement élastique du second diaphragme 14B.

Dans ce troisième mode de réalisation de l'invention, le pincement des deux diaphragmes 14A, 14B entre leurs parties d'appui est réalisé en " parallèle" à l'aide de deux moyens élastiques (nervure annulaire 46, pattes 38P) portés par le même organe de positionnement 38 mais pouvant assurer des serrages relativement indépendants.

L'invention ne se limite pas aux modes der réalisation d'écrits ci-dessus. En particulier, à la différence des modes de réalisation illustrés, l'invention peut s'appliquer à un double embrayage comprenant au moins un embrayage du type dans lequel la position de repos du diaphragme correspond à un couplage de l'arbre de moteur avec l'arbre correspondant de boîte de vitesses.

## Revendications

1. Double embrayage (10), notamment pour véhicule automobile, du type comprenant un couvercle (12) dans lequel sont logés des premier (14A) et second (14B) diaphragmes destinés à coopérer respectivement avec des premier (15A) et second (15B) plateaux de pression, **caractérisé en ce qu'**il comporte un organe (38) de positionnement axial, distinct du couvercle (12), participant au positionnement, par rapport à ce couvercle (12), à la fois du premier diaphragme (14A) et du second diaphragme (14B).

2. Double embrayage (10) selon la revendication 1, **caractérisé en ce que** l'organe (38) de positionnement est fixé sur une face de fixation (40), sensiblement perpendiculaire aux axes des diaphragmes (14A, 14B), solidaire du couvercle (12).

3. Double embrayage (10) selon la revendication 2, **caractérisé en ce que** l'organe de positionnement (38) est fixé sur un épaulement du couvercle (12).

4. Double embrayage (10) selon l'une des revendications 1 à 3, **caractérisé en ce que** l'organe de positionnement (38) est du type à effet élastique axial.

5. Double embrayage (10) selon l'une des revendications 3 ou 4, **caractérisé en ce que** l'organe de positionnement (38) est fixé sur l'épaulement à l'aide de moyens rapportés (42).

6. Double embrayage (10) selon la revendication 5, **caractérisé en ce que** les moyens rapportés (42) participent également à la fixation d'autres organes tels que des languettes de liaison d'un des plateaux de pression (15A) avec le couvercle ou un support pour dispositif (44) de rattrapage d'usure de moyens de friction.

7. Double embrayage (10) selon l'une quelconque des revendications 1 à 6, **caractérisé en ce que** le premier diaphragme (14A) est pincé entre deux parties d'appui et d'articulation sensiblement en vis à vis ménagées respectivement sur l'organe de positionnement (38) et un organe d'entretoisement axial (30) en appui sur le couvercle (12) par l'intermédiaire du second diaphragme (14B).

8. Double embrayage (10) selon la revendication 7, **caractérisé en ce que** la partie d'appui ménagée sur l'organe de positionnement (38) est délimitée par une nervure annulaire.

9. Double embrayage (10) selon la revendication 7 ou 8, **caractérisé en ce que** la partie d'appui ménagée sur l'organe (30) d'entretoisement est délimitée par une extrémité de cet organe (30) d'entretoisement.

10. Double embrayage (10) selon l'une quelconque des revendications 7 à 9, **caractérisé en ce que** le second diaphragme (14B) est pincé entre deux parties d'appui et d'articulation sensiblement en vis à vis ménagées respectivement sur l'organe (30) d'entretoisement et le couvercle (12).

11. Double embrayage (10) selon la revendication 10, **caractérisé en ce que** la partie d'appui ménagée sur l'organe (30) d'entretoisement est délimitée par des pattes radiales (36).

12. Double embrayage (10) selon la revendication 10 ou 11, **caractérisé en ce que** la partie d'appui ménagée sur le couvercle (12) est délimitée par une nervure annulaire (34).

13. Double embrayage (10) selon l'une quelconque des revendications 7 à 12, **caractérisé en ce que** l'organe d'entretoisement (30) est en matière plastique.

14. Double embrayage (10) selon l'une quelconque des revendications 7 à 12, **caractérisé en ce que** l'organe d'entretoisement (30) est en métal, de préférence en tôle.

15. Double embrayage (10) selon l'une quelconque des revendications 7 à 14, **caractérisé en ce que** l'organe d'entretoisement (30) est muni de moyens, par exemple de bossages (33), coopérant avec des moyens complémentaires, par exemple des évidements (33A), ménagés sur le couvercle (12) pour assurer le positionnement angulaire et le centrage de cet organe d'entretoisement (30) par rapport à ce couvercle (12).

16. Double embrayage (10) selon l'une quelconque des revendications 1 à 6, **caractérisé en ce que** le premier diaphragme (14A) est pincé entre deux parties d'appui et d'articulation sensiblement en vis à vis ménagées respectivement sur l'organe de positionnement (38) et le couvercle (12).

17. Double embrayage (10) selon la revendication 16, **caractérisé en ce que** la partie d'appui ménagée sur l'organe de positionnement (38) est délimitée par une nervure annulaire (46).

18. Double embrayage (10) selon la revendication 16 ou 17, **caractérisé en ce que** la partie d'appui ménagée sur le couvercle (12) est délimitée par une nervure annulaire (48).

19. Double embrayage (10) selon l'une quelconque des revendications 16 à 18, **caractérisé en ce que** le second diaphragme (14B) est pincé entre deux parties d'appui et d'articulation sensiblement en vis à vis ménagées respectivement sur l'organe de positionnement (38) et le couvercle (12).

20. Double embrayage (10) selon la revendication 19, **caractérisé en ce que** la partie d'appui ménagée sur l'organe de positionnement (38) est délimitée par des extrémités de pattes (38P) prolongeant l'organe de positionnement (38).

21. Double embrayage (10) selon la revendication 19 ou 20, **caractérisé en ce que** la partie d'appui ménagée sur le couvercle (12) est délimitée par une nervure annulaire (50).

22. Double embrayage (10) selon l'une quelconque des revendications précédentes, **caractérisé en ce que** le premier diaphragme (14A) est destiné à coopérer avec une saillie annulaire (16) solidaire du premier plateau de pression (15A).

23. Double embrayage (10) selon l'une quelconque des revendications précédentes, **caractérisé en ce** le second diaphragme (14B) est destiné à coopérer avec le second plateau de pression (15B) par l'intermédiaire d'un organe mobile (17) d'entretoisement axial.

## Claims

1. A double clutch (10), especially for a motor vehicle, of the type having a cover plate (12) in which a first diaphragm (14A) and a second diaphragm (14B), arranged for cooperation with a first pressure plate (15A) and a second pressure plate (15B) respectively, are lodged, **characterised in that** it includes an axial positioning member (38), distinct from the cover plate (12), for participating in the positioning of the first diaphragm (14A) and also of second diaphragm (14B) with respect to the said cover plate (12).

2. A double clutch (10) according to Claim 1, **characterised in that** the positioning member (38) is fixed on a fastening face (40), which is disposed substantially perpendicular to the axes of the diaphragms (14A, 14B) and which is fixed with respect to the cover plate (12).

3. A double clutch (10) according to Claim 2, **characterised in that** the positioning member (38) is secured on a shoulder of the cover plate (12).

4. A double clutch according to one of Claims 1 to 3, **characterised in that** the positioning member (38) is of the type that exerts an axial elastic effect.

5. A double clutch (10) according to Claim 3 or Claim 4, **characterised in that** the positioning member (38) is secured on the shoulder with the aid of fastening means (42) introduced thereto.

6. A double clutch (10) according to Claim 5, **characterised in that** the introduced fastening means (42) also participate in the securing of further members, such as tongues for coupling one of the pressure plates (15A) with the cover plate, or a support for a device (44) for taking up wear in friction means.

7. A double clutch (10) according to any one of Claims 1 to 6, **characterised in that** the first diaphragm (14A) is gripped between two portions, namely an engagement portion and an articulating portion, which are substantially in facing relationship with each other and which are formed, respectively, on the positioning member (38) and on an axial spacing member (30), the latter being engaged on the cover plate (12) through the second diaphragm (14B).

8. A double clutch (10) according to Claim 7, **characterised in that** the engagement portion formed on the positioning member (38) is delimited by an annular rib.

9. A double clutch (10) according to Claim 7 or Claim 8, **characterised in that** the engagement portion formed on the spacing member (30) is delimited by an end of the said spacing member (30).

10. A double clutch (10) according to one of Claims 7 to 9, **characterised in that** the second diaphragm (14B) is gripped between two portions, namely an engagement portion and an articulating portion, which are substantially in facing relationship with each other and which are formed, respectively, on the spacing member (30) and the cover plate (12).

11. A double clutch (10) according to Claim 10, **characterised in that** the engagement portion formed on the spacing member (30) is delimited by radial lugs (36).

12. A double clutch (10) according to Claim 10 or Claim 11, **characterised in that** the engagement portion formed on the cover plate (12) is delimited by an annular rib (34).

13. A double clutch (10) according to any one of Claims 7 to 12, **characterised in that** the spacing member (30) is made of plastics material.

14. A double clutch (10) according to any one of Claims 7 to 12, **characterised in that** the spacing member (30) is made of metal, being preferably of sheet steel.

15. A double clutch (10) according to any one of Claims 7 to 14, **characterised in that** the spacing member (30) has means, for example bosses (33), which are in cooperation with complementary means, for example openings (33A), formed in the cover plate (12) for the angular positioning and centring of the said spacing member (30) with respect to the said cover plate (12).

16. A double clutch (10) according to any one of Claims 1 to 6, **characterised in that** the first diaphragm (14A) is gripped between two portions, namely an engagement portion and an articulating portion, which are substantially in facing relationship with each other and which are formed, respectively, on the positioning member (38) and the cover plate (12).

17. A double clutch (10) according to Claim 16, **characterised in that** the engagement portion formed on the positioning member (38) is delimited by an annular rib.

18. A double clutch (10) according to Claim 16 or Claim 17, **characterised in that** the engagement portion formed on the cover plate (12) is delimited by an annular rib (48).

19. A double clutch (10) according to any one of Claims 16 to 18, **characterised in that** the second diaphragm (14B) is gripped between two portions, namely an engagement portion and an articulating portion, which are substantially in facing relationship with each other and which are formed, respectively, on the positioning member (38) and on the cover plate (12).

20. A double clutch (10) according to Claim 19, **characterised in that** the engagement portion formed on the positioning member (38) is delimited by ends of lugs (38P) which are lengthwise extensions of the positioning member (38).

21. A double clutch (10) according to Claim 19 or Claim 20, **characterised in that** the engagement portion formed on the cover plate (12) is delimited by an annular groove (50).

22. A double clutch (10) according to any one of the preceding Claims, **characterised in that** the first diaphragm (14A) is adapted to cooperate with an annular projecting element (16) which is fixed with respect to the first pressure plate (15A).

23. A double clutch (10) according to any one of the preceding Claims, **characterised in that** the second diaphragm (14B) is adapted to cooperate with a second pressure plate (15B) through a movable, axial spacing member (17).

## Patentansprüche

1. Doppelkupplung (10), insbesondere für Kraftfahrzeuge, umfassend eine Deckel (12), in dem erste (14A) und zweite (14B) Membranfedern angebracht sind, die dazu bestimmt sind, jeweils mit einer ersten (15A) bzw. zweiten (15B) Druckplatte zusammenzuwirken,
**dadurch gekennzeichnet,**
**dass** sie ein vom Deckel (12) getrenntes axiales Positionierungselement (38) aufweist, welches zugleich an der Positionierung der ersten Membranfeder (14A) und der zweiten Membranfeder (14B) relativ zum Deckel (12) mitwirkt.

2. Doppelkupplung (10) nach Anspruch 1, **dadurch gekennzeichnet, dass** das Positionierungselement (38) an einer fest mit dem Deckel verbundenen, zur Achse der Membranfedern (14A, 14B) in etwa senkrechten Befestigungsfläche (40) befestigt ist.

3. Doppelkupplung (10) nach Anspruch 2, **dadurch gekennzeichnet, dass** das Positionierungselement (38) an einem Vorsprung des Deckels (12) befestigt ist.

4. Doppelkupplung (10) nach einem der Ansprüche 1 bis 3, **dadurch gekennzeichnet, dass das** Positionierungselement (38) mit axial elastischer Wirkung ist.

5. Doppelkupplung (10) nach Anspruch 3 oder 4, **dadurch gekennzeichnet, dass** das Positionierungselement (38) an dem Vorsprung mit Hilfe von eingebrachten Mitteln (42) befestigt ist.

6. Doppelkupplung (10) nach Anspruch 5, **dadurch gekennzeichnet, dass** die eingebrachten Mittel (42) außerdem an der Befestigung von anderen Organen wie Verbindungszungen einer der Druckplatten (15A) mit dem Deckel oder einem Träger für eine Nachstellvorrichtung (44) für den Verschleiß der Reibmittel mitwirken.

7. Doppelkupplung (10) nach einem der Ansprüche 1 bis 6, **dadurch gekennzeichnet, dass** die erste Membranfeder (14A) zwischen zwei Auflage- und Schwenkteilen eingeklemmt ist, die jeweils in etwa einander gegenüberliegend eingebracht sind in dem Positionierungselement (38) und einem axialen Stützorgan (30), welches auf dem Deckel (12) unter Zwischenlage der zweiten Membranfeder (14B) aufliegt.

8. Doppelkupplung (10) nach Anspruch 7, **dadurch gekennzeichnet, dass** der auf dem Positionierungselement (38) sitzende Auflageteil durch eine ringförmige Rippe festgelegt ist.

9. Doppelkupplung (10) nach Anspruch 7 oder 8, **dadurch gekennzeichnet, dass** der auf dem Stützorgan (30) sitzende Auflageteil durch ein Endstück dieses Stützorgans (30) festgelegt ist.

10. Doppelkupplung (10) nach einem der Ansprüche 7 bis 9, **dadurch gekennzeichnet, dass** die zweite Membranfeder (14B) zwischen zwei Auflage- und Schwenkteilen eingeklemmt ist, die jeweils in etwa einander gegenüberliegend in dem Stützorgan (30) und dem Deckel (12) eingebracht sind.

11. Doppelkupplung (10) nach Anspruch 10, **dadurch gekennzeichnet, dass** der auf dem Stützorgan (30) sitzende Auflageteil durch radiale Laschen (36) festgelegt ist.

12. Doppelkupplung (10) nach Anspruch 10 oder 11, **dadurch gekennzeichnet, dass** der auf dem Deckel (12) sitzende Auflageteil durch eine ringförmige Rippe (34) festgelegt ist.

13. Doppelkupplung (10) nach einem der Ansprüche 7 bis 12, **dadurch gekennzeichnet, dass** das Stützorgan (30) aus Kunststoff besteht.

14. Doppelkupplung (10) nach einem der Ansprüche 7 bis 12, **dadurch gekennzeichnet, dass** das Stützorgan (30) aus Metall, vorzugsweise aus Blech besteht.

15. Doppelkupplung (10) nach einem der Ansprüche 7 bis 14, **dadurch gekennzeichnet, dass** das Stützorgan (30) mit Mitteln, beispielsweise mit Buckeln (33) versehen ist, die mit komplementören Mitteln, beispielsweise Ausnehmungen (33A) zusammenwirken, welche in dem Deckel (12) eingebracht sind um die Winkel-Positionierung und die Zentrierung des Stützorgans (30) relativ zum Deckel (12) zu gewöhrleisten.

16. Doppelkupplung (10) nach einem der Ansprüche 1 bis 6, **dadurch gekennzeichnet, dass** die erste Membranfeder (14A) zwischen zwei Auflage- und Schwenkteilen eingeklemmt ist, die jeweils in etwa einander gegenüberliegend in dem Positionierungselement (38) und dem Deckel (12) eingebracht sind.

17. Doppelkupplung (10) nach Anspruch 16, **dadurch gekennzeichnet, dass** der auf dem Positionierungselement (38) sitzende Auflageteil durch eine ringförmige Rippe (46) festgelegt ist.

18. Doppelkupplung (10) nach Anspruch 16 oder 17, **dadurch gekennzeichnet, dass** der auf dem Deckel (12) sitzende Auflageteil durch eine ringförmige Rippe (48) festgelegt ist.

19. Doppelkupplung (10) nach einem der Ansprüche 16 bis 18, **dadurch gekennzeichnet, dass** die zweite Membranfeder (14B) zwischen zwei Auflage- und Schwenkteilen eingeklemmt ist, die jeweils in etwa einander gegenüberliegend in dem Positionierungselement (38) und dem Deckel (12) eingebracht sind.

20. Doppelkupplung (10) nach Anspruch 19, **dadurch gekennzeichnet, dass** der auf dem Positionierungselement (38) sitzende Auflageteil durch Endbereiche von Laschen (38P) festgelegt ist, die das Positionierungselement (38) verlängern.

21. Doppelkupplung (10) nach Anspruch 19 oder 20, **dadurch gekennzeichnet, dass** der auf dem Deckel (12) sitzende Auflageteil durch eine ringförmige Rippe (50) festgelegt ist.

22. Doppelkupplung (10) nach einem der vorherigen Ansprüche, **dadurch gekennzeichnet, dass** die erste Membranfeder (14A) dazu bestimmt ist, mit einer fest mit der ersten Druckplatte (15A) verbundenen ringf÷rmigen Vorsprung (16) zusammenzuwirken.

23. Doppelkupplung (10) nach einem der vorherigen Ansprüche, **dadurch gekennzeichnet, dass** die zweite Membranfeder (14B) dazu bestimmt ist, mit der zweiten Druckplatte (15B) unter Zwischenlage eines beweglichen axialen Stützorgans (17) zusammenzuwirken.
